# EUROPEAN PATENT SPECIFICATION

(11) **EP 2 425 900 B1**
(45) Date of publication and mention of the grant of the patent: **23.04.2014**
(21) Application number: 11179001.0
(22) Date of filing: 26.08.2011
(51) Int. Cl.: B07B 1/18, B07B 1/56, B09B 3/00, C22B 43/00, H01J 9/50, B07B 1/22, C22B 7/00

(54) **Device and method for removing mercury from mercury-contaminated material**
Vorrichtung und Verfahren zum Entfernen von Quecksilber aus mit Quecksilber verschmutztem Material
Dispositif et procédé de suppression de mercure d'un matériau contaminé au mercure

(30) Priority: 06.09.2010 SE 1050910
(43) Date of publication of application: 07.03.2012
(73) Proprietor: MRT System International AB, 371 47 Karlskrona (SE)
(72) Inventor: Nilsson, Magnus, 371 60 Lyckeby (SE)
(74) Representative: Persson, Albin

(56) References cited:
- EP-A1- 0 752 276
- DE-A1- 4 030 732
- DE-A1- 4 234 447
- US-A- 5 746 987

## Description

### FIELD OF THE INVENTION

The invention relates to a device and a method for removing mercury from mercury-contaminated material. This type of devices and methods are used for removing mercury from different types of products and objects to enable further processing thereof in the form of recovering or disposal without extensive environmental influence due to the mercury. This type of devices and methods are used for removing mercury from objects divided into pieces, such as worn out LCD screens, fluorescent lamps, low-energy bulbs and similar.

### PRIOR ART

There are devices for removing mercury from mercury-contaminated material in the prior art. One such type of device comprises a sieve arranged in a chamber for separating a smaller material fraction from a larger material fraction of mercury-contaminated material divided into pieces. The smaller material fraction contains a relatively large amount of mercury and is further processed, for example by heating filtering and similar to remove mercury from it.

DE4030732A1 discloses a process for recycling fluorescent tubes, comprising a sieving step followed by a heating step for removing mercury.

A problem with such devices according to prior art is that they are inefficient and that there is a risk that mercury-contaminated material end up in an environment in which it can have a negative influence.

A drawback of such prior art devices for removing mercury from mercury-contaminated material is that they have low capacity and require time consuming processes for removing the mercury.

Another drawback with such prior art devices is that they are complex and includes a plurality of process steps, which result in costly installations for processing the mercury-contaminated material.

### SUMMARY OF THE INVENTION

An object of the invention is to avoid the drawbacks and problems of the prior art. The device and method according to the invention result in a safe and efficient removal of mercury from mercury-contaminated material.

The present invention relates to a device for removing mercury from mercury-contaminated material, comprising a chamber having an inlet for mercury- contaminated material, and a sieve arranged inside the chamber for separating a larger material fraction of the mercury-contaminated material from a smaller material fraction thereof, wherein the chamber is provided with a first outlet for the larger material fraction and a second outlet for the smaller material fraction, characterised in that the device comprises at least one heating element to vaporize mercury on at least the larger material fraction inside the chamber, so that mercury on the larger material fraction is removed by heating, and that the chamber is provided with a third outlet for an outlet flow of vaporized mercury. Hence, the device is arranged so that mercury-contaminated material is sieved mechanically at the same time as mercury on at least the larger material fraction is vaporized by heating. By removing mercury and mercury-contaminated material both mechanically and thermally in one step in the same equipment provides an efficient device for removing mercury and recycling mercury-contaminated material.

The sieve can be a rotating sieve arranged inside the chamber, wherein the larger fraction of mercury-contaminated material can be conveyed along the rotating sieve during simultaneous heating thereof. The rotating sieve can be angled or inclined in relation to a horizontal plane, so that the larger material fraction is conveyed along the rotating sieve and along the heating element by means of gravity and the rotation of the rotating sieve.

One or more heating elements can be arranged inside the chamber, for example along the rotating sieve, so that the larger material fraction is heated during its transport through the chamber. The heating elements can be arranged between in interior wall of the chamber and the sieve.

The sieve can be arranged so that the diameter of the smaller material fraction is less than about 5-20 mm. Hence, the diameter of the apertures or holes in the sieve can be about 5-20 mm. It has been found that a material fraction smaller than about 5-20 mm contains the major part of the mercury in a divided or crushed mercury-containing material in the form of LCD screens, fluorescent tubes, lamps and lighting. It has also been found that a material fraction larger than about 5-20 mm of said material contains mercury mainly on the surface.

The third outlet can be connected to a ventilation system for removing vaporized mercury from the chamber. The ventilation system can comprise a fan to provide the outlet flow and to provide a negative pressure in the chamber. Hence, mercury leaking from the chamber is prevented while the mercury in the outlet flow can be processed in an efficient and safe manner. The ventilation system can comprise a cyclone separator and filters in the form of a particulate filter, a suppression filter and a carbon filter for removing mercury from the outlet flow. The device can comprise a cooling device between the chamber and the carbon filter for cooling the outlet flow, so that depletion of the carbon filter is prevented and efficient collection of the mercury is obtained.

The present invention also relates to a method for removing mercury from mercury-contaminated material, comprising the steps of feeding mercury-contaminated material into a chamber, and sieving the mercury-contaminated material inside the chamber to form a larger material fraction and a smaller material fraction of mercury-contaminated material, characterised by the steps of heating at least the larger material fraction inside the chamber and thereby vaporize mercury on the larger material fraction while simultaneously sieving the mercury-contaminated material, and removing the larger material fraction from the chamber through a first outlet, the smaller material fraction through a second outlet and an outlet flow containing the vaporized mercury through a third outlet.

The sieve can be a rotating sieve and the method can further comprise the steps of rotating the sieve and simultaneously transporting the larger material fraction through the sieve and simultaneously heating along the sieve. The method can further comprise the step of separating a material fraction having a diameter less than about 5-20 mm from the larger material fraction by sieving. The method can further comprise the steps of removing the outlet flow from the chamber by means of a fan while forming a negative pressure in the chamber. Further, the outlet flow can be filtered to remove mercury from it.

Further characteristics and advantages of the present invention will become apparent from the description of the embodiments below, the appended drawings and the dependent claims.

### SHORT DESCRIPTION OF THE DRAWINGS

The invention will now be described more in detail with the aid of embodiment examples and with reference to the appended drawings, in which
Fig. 1 is a schematic perspective view of a device for removing mercury from mercury-contaminated material according to one embodiment of the present invention, showing a rotating sieve arranged in a chamber, a cooling device and a ventilation system,

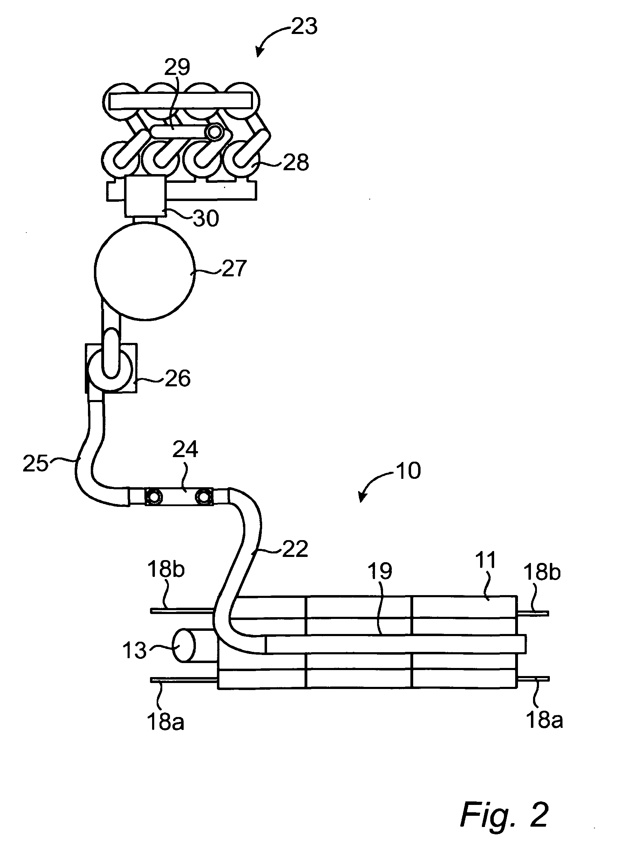

Fig. 2 is a schematic view from above of the device according to Fig. 1,
Fig. 3 is a schematic side view of the rotating sieve,
Fig. 4 is a schematic cross section view of the rotating sieve.

### THE INVENTION

Referring to the figures a device 10 for removing mercury from mercury-contaminated material is illustrated schematically according to one embodiment of the present invention. The device 10 is arranged for removing mercury from a divided or crushed material, such as for example divided or crushed LCD screens, fluorescent lamps, lighting and similar, for recycling thereof.

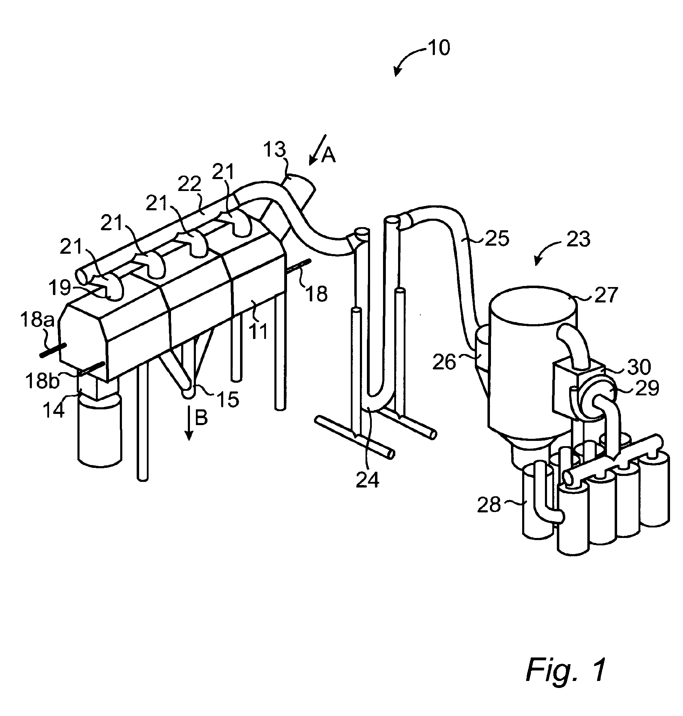

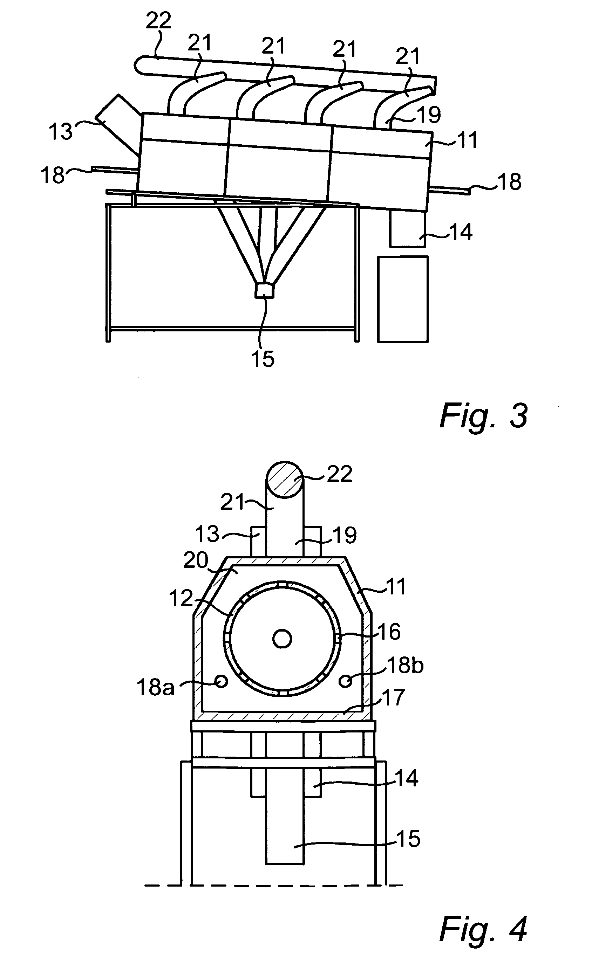

The device 10 comprises a chamber 11 provided with a sieve in the form of a rotating sieve 12 or any other type of sieve for separating a larger material fraction of the mercury-contaminated material from a smaller fraction thereof. The rotating sieve 12 is illustrated in Fig. 4. The chamber 11 is provided with an inlet 13 for crushed or divided mercury-contaminated material, a first outlet 14 for the larger material fraction and a second outlet 15 for the smaller material fraction. The inlet 13 is arranged so that the mercury-contaminated material can be conveyed into the rotating sieve 12 inside the chamber 11. Feeding of mercury-contaminated material through the inlet 13 is illustrated by means of the arrow A in Fig. 1. The inlet 13 is arranged at a first end of the chamber 11 and the rotating sieve 12, wherein the first outlet 14 is arranged at the opposite second end of the chamber 11 and the rotating sieve 12. The device 10 is arranged so that the larger material fraction is conveyed through the chamber 11 along and inside the rotating sieve 12 as the mercury-contaminated material is sieved mechanically, wherein the smaller material fraction exits the rotating sieve 12. The second outlet 15 is, for example, arranged between the inlet 13 and the first outlet 14.

The rotating sieve 12, as illustrated in Fig. 4, comprises a drum rotating around a centre axis and having a plurality of apertures 16. For example, the rotating sieve 12 comprises a perforated sheet or similar. Alternatively, the rotating sieve 12 comprises a cylindrical mesh structure or similar. Alternatively, the rotating sieve 12 comprises longitudinal tubes, such as a plurality of longitudinal tubes arranged in parallel forming a revolver cylinder structure. During the sieving process the smaller material fraction fall through the apertures 16 of the rotating sieve 12 and is collected in a bottom 17 of the chamber 11 and is conveyed out of the chamber 11 through the second outlet 15, as illustrated by means of the arrow B in Fig. 1. The smaller material fraction is conveyed from the second outlet 15 for further processing, which is described in more detail below. The smaller material fraction will contain mercury when exiting the chamber 11. For example, the rotating sieve 12 is arranged with apertures 16 having a diameter of 1-50 mm, 2-30 mm or about 5-20 mm, so that the smaller material fraction has particles having a diameter of less than about 1-50 mm, 3-30 mm or about 5-20 mm. The size is dependent on the material to be separated. The larger material fraction is conveyed axially along the rotating sieve 12 to the first outlet 14. For example, the chamber 11 with the rotating sieve 12 is inclined towards the first outlet 14, as illustrated in Fig. 3, so that the mercury-contaminated material is conveyed through the rotating sieve 12 when it is rotated. Hence, the chamber 11 or at least the rotating sieve 12 inside the chamber 11 is inclined in relation to a horizontal plane, so that the rotating sieve 12 is inclined downwards towards the first outlet 14. For example, the inclination is adjustable.

The device 10 comprises at least one heating element 18 for heating at least the larger material fraction inside the chamber 11. The heating element 18 is arranged for vaporizing mercury on especially the larger material fraction, so that the mercury is removed therefrom by heating. Hence, the device 10 is arranged for sieving the mercury-contaminated material mechanically during simultaneous heating thereof to vaporize mercury on the material and especially on the larger material fraction while the smaller material fraction is separated from it. In the illustrated embodiment a first heating element 18a and a second heating element 18b extend axially along the rotating sieve 12 inside a lower portion of the chamber 11 to heat the mercury-contaminated material. The heating elements 18a, 18b are arranged between the rotating sieve 12 and the chamber 11, for example at the bottom 17 of the chamber 11, so that the heating elements 18a, 18b extend along the direction of transport of the larger material fraction. Hence, the heating elements 18a, 18b are arranged inside the chamber 11 but outside the rotating sieve 12 and extend in parallel to the axis of the rotating sieve 12. Alternatively, the heating elements are arranged inside the rotating sieve 12 or in any other way inside the chamber 11. Alternatively, the heating element 18 comprises a heating means arranged outside the chamber 11, wherein a medium, such as air, heated by the heating means is conveyed to the chamber 11. The heating elements 18a, 18b is, for example, electric heating elements, such as resistor elements. Alternatively, the heating element comprises a burner. Alternatively, the heating element 18 is arranged in another way.

The chamber 11 is provided with a third outlet 19 for an outlet flow of vaporized mercury. The outlet flow includes for example air, vaporized mercury and possibly other gases. The third outlet 19 is arranged in an upper portion 20 of the chamber 11. For example, the third outlet 19 is arranged with a plurality of outlet tubes 21 distributed axially along the chamber 11, which are connected to a conduit 22 for further transport of the outlet flow. Hence, the device 10 is arranged for receiving mercury-contaminated material in the form of, for example, crushed or divided LCD screens, fluorescent lamps and other objects containing mercury through the inlet 13 to the chamber 11, divide the mercury-contaminated material into a larger material fraction and a smaller material fraction in the rotating sieve 12 during simultaneous heating through the heating elements 18a, 18b, so that the mercury on the mercury-contaminated material is vaporized inside the chamber 11, wherein the larger and purified material fraction exits the chamber 11 through the first outlet 14, the smaller material fraction exits the chamber 11 through the second outlet 15 for further processing, and vaporized mercury exit the chamber 11 through the third outlet 19 in an outlet flow for further processing. The larger material fraction is, for example, collected in a closed container when leaving the chamber 11 through the first outlet 14, wherein the mercury substantially has been removed from the larger material fraction and can be subject to further material recycling.

The device 10 comprises a ventilation system 23 connected to the chamber 11 and a cooling system 24 for cooling the outlet flow. For example, the cooling system 24 is arranged between the third outlet 19 of the chamber 11 and the ventilation system 23. For example, the cooling system 24 comprises a heat exchanger, such as an air exchanger, or a shell and coil condenser having external cooling. A shell and coil condenser condenses mercury from the outlet flow, wherein condensed mercury can be collected in a conventional manner. For example, the cooling system 24 is arranged for cooling the outlet flow to below 50 °C. For example, the conduit 22 connects the third outlet 19 of the chamber 11 to the cooling system 24. The cooling system 24 is connected to the ventilation system 23 in a conventional manner, such as by means of a tube 25 for conveying the outlet flow to the ventilation system 23.

The ventilation system 23 is arranged to produce a negative pressure in the chamber 11, provide the outlet flow with vaporized mercury from the chamber 11 and remove mercury from the outlet flow. For example, the ventilation system 23 is arranged for receiving the smaller material fraction from the second outlet 15 of the chamber 11. The ventilation system 23 comprises a cyclone separator 26, a particulate filter 27, a carbon filter 28 and a fan 29. The fan 29 is arranged for providing the outlet flow and conveying the outlet flow from the chamber 11. The fan 29 is further arranged for providing the negative pressure in the chamber 11. The fan 29 is, for example, arranged in a conventional manner.

The tube 25 connects the cooling system 24 and the cyclone separator 26. For example, the cyclone separator 26 is connected to the second outlet 15 of the chamber 11 through a conventional transport system for conveying the smaller material fraction from the chamber 11 to the cyclone separator 26. The cyclone separator 26 is arranged for removing heavier particles from the outlet flow and possibly from the smaller material fraction. The heavier particles are, for example, collected in a closed collecting vessel. The heavier particles will be contaminated by mercury. The cyclone separator 26 is connected to the particulate filter 27, wherein the outlet flow from the cyclone separator 26 is conveyed to the particulate filter 27. The particulate filter 27 is arranged for removing any dust from the outlet flow or the outlet flow in combination with any remaining material from the smaller material fraction. In the illustrated embodiment the outlet flow is drawn through a suppression filter 30 and further into the carbon filter 28. The suppression filter 30 is arranged to prevent possible leakage from clogging the subsequent carbon filter 28. After the suppression filter 30 the outlet flow is passed through the carbon filter 28 for removing any remaining mercury from the outlet flow. The carbon filter 28 is, for example, impregnated with sulphur for binding mercury of the outlet flow.

## Claims

1. A device (10) for removing mercury from mercury-contaminated material, comprising a chamber (11) having an inlet (13) for mercury- contaminated material, and a sieve (12) arranged inside the chamber (11) for separating a larger material fraction of the mercury-contaminated material from a smaller material fraction thereof, wherein the chamber (11) is provided with a first outlet (14) for the larger material fraction and a second outlet (15) for the smaller material fraction, ***characterised* in**
**that** the device (10) comprises at least one heating element (18) for
vaporizing mercury on at least the larger material fraction inside the chamber (11), so that mercury-contaminated material can be sieved at the same time as mercury on the larger material fraction can be removed from the larger material fraction by heating, and
**that** the chamber (11) is provided with a third outlet (19) for an outlet
flow with vaporized mercury.

2. A device according to claim 1, wherein the sieve (12) is a rotating sieve arranged inside the chamber (11).

3. A device according to claim 2, wherein the heating element (18) is elongated and is arranged along the rotating sieve (12) inside the chamber (11).

4. A device according to claim 3, wherein the rotating sieve (12) is inclined in relation to a horizontal plane, so that the larger material fraction is conveyed along the rotating sieve (12) and along the heating element (18).

5. A device according to any of the preceding claims, wherein the heating element (18) is arranged between an interior wall of the chamber (11) and the sieve (12).

6. A device according to any of the preceding claims, wherein the sieve (12) is arranged so that the diameter of the smaller material fraction is less than about 5-20 mm.

7. A device according to any of the preceding claims, wherein the third outlet (19) is connected to a ventilation system (23) for removing vaporized mercury from the chamber (11).

8. A device according to claim 7, wherein the ventilation system (23) comprises a fan (29) to provide the outlet flow and to provide negative pressure in the chamber (11).

9. A device according to claim 8, wherein the ventilation system (23) comprises a cyclone separator (26) and a filter (28) for removing mercury from the outlet flow.

10. A device according to claim 9, wherein a cooling system (24) is arranged between the chamber (11) and the filter (28).

11. A method for removing mercury from mercury-contaminated material, comprising the steps of feeding mercury-contaminated material into a chamber (11), and sieving the mercury-contaminated material inside the chamber to form a larger material fraction and a smaller material fraction of mercury-contaminated material, ***characterised* by** the steps of heating at least the larger material fraction inside the chamber (11) and thereby vaporize mercury on the larger material fraction while simultaneously sieving the mercury-contaminated material, and removing the larger material fraction from the chamber (11) through a first outlet (14), the smaller material fraction through a second outlet (15) and an outlet flow containing the vaporized mercury through a third outlet (19).

12. A method according to claim 11, comprising the steps of rotating the sieve while simultaneously conveying the larger material fraction through it and heating along the sieve (12).

13. A method according to claim 11 or 12, comprising the step of separating a material fraction having a diameter less than about 5-20 mm from the larger material fraction by the sieving.

14. A method according to any of claims 11-13, comprising the steps of removing the outlet flow from the chamber (11) by means of a fan (29) while forming a negative pressure in the chamber (11).

15. A method according to claim 14, comprising the step of filtrating the outlet flow to remove mercury from it.

## Patentansprüche

1. Einrichtung (10) zum Entfernen von Quecksilber aus quecksilberkontaminiertem Material, aufweisend eine Kammer (11) mit einem Eingang (13) für quecksilberkontaminiertes Material, und ein Sieb (12), das in der Kammer (11) angeordnet ist, um einen größeren Materialanteil des quecksilberkontaminierten Materials von einem kleineren Materialanteil desselben zu trennen, wobei die Kammer (11) über einen ersten Ausgang (14) für den größeren Materialanteil und einen zweiten Ausgang (15) für den kleineren Materialanteil verfügt, **dadurch gekennzeichnet, dass**
die Einrichtung (10) zumindest ein Aufwärmelement (18) zum Verdampfen von Quecksilber auf zumindest dem größeren Materialanteil in der Kammer (11) aufweist, so dass das quecksilberkontaminierte Material zur selben Zeit gesiebt werden kann, wie das Quecksilber auf dem größeren Materialanteil durch Aufwärmen von dem größeren Materialanteil entfernt werden kann, und
die Kammer (11) über einen dritten Ausgang (19) für eine Ausgangsströmung mit verdampftem Quecksilber verfügt.

2. Einrichtung nach Anspruch 1, wobei das Sieb (12) ein drehendes Sieb ist, das in der Kammer (11) angeordnet ist.

3. Einrichtung nach Anspruch 2, wobei das Aufwärmelement (18) verlängert ist und entlang des drehenden Siebs (12) in der Kammer (11) angeordnet ist.

4. Einrichtung nach Anspruch 3, wobei das drehende Sieb (12) im Verhältnis zu einer horizontalen Ebene geneigt ist, so dass der größere Materialanteil entlang des drehenden Siebs (12) und entlang des Aufwärmelements (18) befördert wird.

5. Einrichtung nach einem der vorgenannten Ansprüche, wobei das Aufwärmelement (18) zwischen einer Innenwand der Kammer (11) und dem Sieb (12) angeordnet ist.

6. Einrichtung nach einem der vorgenannten Ansprüche, wobei das Sieb (12) so angeordnet ist, dass der Durchmesser des kleineren Materialanteils weniger als circa 5-20 mm beträgt.

7. Einrichtung nach einem der vorgenannten Ansprüche, wobei der dritte Ausgang (19) mit einem Belüftungssystem (23) zum Entfernen verdampften Quecksilbers aus der Kammer (11) verbunden ist.

8. Einrichtung nach Anspruch 7, wobei das Belüftungssystem (23) ein Gebläse (29) aufweist, um die Ausgangsströmung zu erzeugen und einen Unterdruck in der Kammer (11) zu erzeugen.

9. Einrichtung nach Anspruch 8, wobei das Belüftungssystem (23) einen Zyklonabscheider (26) und einen Filter (28) zum Entfernen von Quecksilber aus der Ausgangsströmung aufweist.

10. Einrichtung nach Anspruch 9, wobei sich ein Kühlsystem (24) zwischen der Kammer (11) und dem Filter (28) befindet.

11. Verfahren zum Entfernen von Quecksilber aus quecksilberkontaminiertem Material, aufweisend die Schritte des Füllens von quecksilberkontaminiertem Material in eine Kammer (11) und Aussieben des quecksilberkontaminierten Materials in der Kammer, um einen größeren Materialanteil und einen kleineren Materialanteil an quecksilberkontaminiertem Material zu bilden, **gekennzeichnet durch** die Schritte des Aufwärmens zumindest des größeren Materialanteils in der Kammer (11), wodurch das Quecksilber auf dem größeren Materialanteil verdampft, während das quecksilberkontaminierte Material gleichzeitig ausgesiebt wird, und des Entfernens des größeren Materialanteils aus der Kammer (11) **durch** einen ersten Ausgang (14) des kleineren Materialanteils **durch** einen zweiten Ausgang (15) und einer Ausgangsströmung, die das verdampfte Quecksilber enthält, **durch** einen dritten Ausgang (19).

12. Verfahren nach Anspruch 11, aufweisend die Schritte des Drehens des Siebs, während gleichzeitig der größere Materialanteil durch dasselbe befördert und entlang des Siebs (12) aufgewärmt wird.

13. Verfahren nach Anspruch 11 oder 12, aufweisend den Schritt des Trennens eines Materialanteils mit einem Durchmesser von weniger als 5-20 mm von dem größeren Materialanteil durch das Aussieben.

14. Verfahren nach einem der Ansprüche 11-13, aufweisend die Schritte des Entfernens der Ausgangsströmung aus der Kammer (11) mithilfe eines Gebläses (29) während des Erzeugens eines Unterdrucks in der Kammer (11).

15. Verfahren nach Anspruch 14, aufweisend den Schritt des Filterns der Ausgangsströmung, um Quecksilber daraus zu entfernen.

## Revendications

1. Dispositif (10) de suppression du mercure d'un matériau contaminé au mercure, comprenant une chambre (11) ayant un orifice d'entrée (13) pour le matériau contaminé au mercure, et un tamis (12) disposé à l'intérieur de la chambre (11) destiné à séparer une fraction de matériau grossière du matériau contaminé au mercure par rapport à une fraction de matériau fine de celui-ci, dans lequel la chambre (11) est dotée d'un premier orifice de sortie (14) pour la fraction de matériau grossière et d'un deuxième orifice de sortie (15) pour la fraction de matériau fine, **caractérisé**
**en ce que** le dispositif (10) comprend au moins un élément chauffant (18) destiné à vaporiser le mercure sur au moins la fraction de matériau grossière à l'intérieur de la chambre (11), de sorte que le matériau contaminé au mercure puisse être tamisé en même temps que le mercure de la fraction de matériau grossière peut être supprimé de la fraction de matériau fine par chauffage, et
**en ce que** la chambre (11) est dotée d'un troisième orifice de sortie (19) pour un flux de sortie avec du mercure vaporisé.

2. Dispositif selon la revendication 1, dans lequel le tamis (12) est un tamis rotatif disposé à l'intérieur de la chambre (11).

3. Dispositif selon la revendication 2, dans lequel l'élément chauffant (18) est allongé et est disposé le long du tamis rotatif (12) à l'intérieur de la chambre (11).

4. Dispositif selon la revendication 3, dans lequel le tamis rotatif (12) est incliné par rapport à un plan horizontal, de sorte que la fraction de matériau grossière soit transportée le long du tamis rotatif (12) et le long de l'élément chauffant (18).

5. Dispositif selon l'une quelconque des revendications précédentes, dans lequel l'élément chauffant (18) est disposé entre une paroi intérieure de la chambre (11) et le tamis (12).

6. Dispositif selon l'une quelconque des revendications précédentes, dans lequel le tamis (12) est disposé de sorte que le diamètre de la fraction de matériau fine soit inférieur à environ 5 à 20 mm.

7. Dispositif selon l'une quelconque des revendications précédentes, dans lequel le troisième orifice de sortie (19) est connecté à un système de ventilation (23) destiné à supprimer le mercure vaporisé de la chambre (11).

8. Dispositif selon la revendication 7, dans lequel le système de ventilation (23) comprend un ventilateur (29) destiné à fournir le flux d'orifice de sortie et à fournir une pression négative dans la chambre (11).

9. Dispositif selon la revendication 8, dans lequel le système de ventilation (23) comprend un séparateur à cyclone (26) et un filtre (28) destiné à supprimer le mercure du flux d'orifice de sortie.

10. Dispositif selon la revendication 9, dans lequel un système de refroidissement (24) est disposé entre la chambre (11) et le filtre (28).

11. Procédé de suppression du mercure d'un matériau contaminé au mercure comprenant les étapes consistant à amener du matériau contaminé au mercure dans une chambre (11), et à tamiser le matériau contaminé au mercure à l'intérieur de la chambre pour former une fraction de matériau grossière et une fraction de matériau fine du matériau contaminé au mercure, **caractérisé par** les étapes consistant à chauffer au moins la fraction de matériau grossière à l'intérieur de la chambre (11) et à vaporiser de cette manière le mercure de la fraction de matériau grossière tout en tamisant simultanément le matériau contaminé au mercure, et à supprimer la fraction de matériau grossière de la chambre (11) à travers un premier orifice de sortie (14), la fraction de matériau fine à travers un deuxième orifice de sortie (15) et un flux d'orifice de sortie contenant le mercure vaporisé à travers un troisième orifice de sortie (19).

12. Procédé selon la revendication 11, comprenant les étapes consistant à faire tourner le tamis tout en transportant simultanément la fraction de matériau grossière à travers celui-ci et à chauffer le long du tamis (12).

13. Procédé selon la revendication 11 ou 12, comprenant les étapes consistant à séparer une fraction de matériau ayant un diamètre inférieur à environ 5 à 20 mm de la fraction de matériau grossière par le biais du tamis.

14. Procédé selon l'une quelconque des revendications 11 à 13, comprenant les étapes consistant à mettre en mouvement le flux d'orifice de sortie de la chambre (11) au moyen d'un ventilateur (29) tout en formant une pression négative dans la chambre (11).

15. Procédé selon la revendication 14, comprenant l'étape consistant à filtrer le flux d'orifice de sortie pour supprimer le mercure de celui-ci.
